# EUROPÄISCHE PATENTSCHRIFT

(11) **EP 1 597 660 B1**
(45) Veröffentlichungstag und Bekanntmachung des Hinweises auf die Patenterteilung: **05.09.2012**
(21) Anmeldenummer: 04705376.4
(22) Anmeldetag: 27.01.2004
(51) Int. Cl.: G06F 1/18

(54) **Optionaler Steckplatz für einen Blade-Server**
Optional slot for a blade server
Logement d'extension optionnel destiné à un serveur lame

(30) Priorität: 28.02.2003 DE 10308869
(43) Veröffentlichungstag der Anmeldung: 23.11.2005
(73) Patentinhaber: Fujitsu Technology Solutions Intellectual Property GmbH, 80807 München (DE)
(72) Erfinder: MUEHSAM, Gerhard, 86343 Königsbrunn (DE)
(74) Vertreter: Epping, Wilhelm
(86) Internationale Anmeldenummer: PCT/DE2004/000122
(87) Internationale Veröffentlichungsnummer: WO 2004/077285

(56) Entgegenhaltungen:
- WO-A-02/07488
- WO-A-02/069076
- WO-A-02/101573
- GB-A- 2 378 822
- PHOENIX DATACOM: "PHOENIX BLADE SERVER 318 SERIES" PRODUCT BROCHURE, [Online] Juni 2002 (2002-06), XP002292979 Gefunden im Internet: URL:http://www.phoenixdatacom.com/pbs318_3 20_brochure.pdf> [gefunden am 2004-08-18]
- NEXCOM: "The Only Expandable Blade Server In The World" PRESS RELEASE, [Online] 27. Mai 2002 (2002-05-27), XP002292980 Gefunden im Internet: URL:http://www.nexcom.com/news/press_relea se/news20020527-02p.htm> [gefunden am 2004-07-09]
- FUJITSU-SIEMENS COMPUTERS: "Blade-Technologie für Server-Farmen" WHITE PAPER, [Online] 6. Mai 2002 (2002-05-06), Seiten 1-11, XP002292981 Gefunden im Internet: URL:http://vilpublic.fujitsu-siemens.com/v il/pc/vil/primergy/public/whitepaper_produ ctfacts/wp_prim-blade-server_d.pdf> [gefunden am 2004-07-09]

## Beschreibung

Die Erfindung betrifft eine Anordnung für einen optionalen Steckplatz in einem Datenverarbeitungssystem gemäß dem Oberbegriff des Anspruchs 1.

Derartige Anordnungen sind beispielsweise aus der WO 02/07488, WO 02/101573 oder auch WO 02/0690076 bekannt. Die Druckschriften Phoenix Datacom: "Phoenix Blade Server 318 Series von http://phoenixdatacom.com/pbs318 320 brochure.pdf und NEXCOM: "The only expandable Blade Server in the world" von http://www.nexcom.com/news/press release/news20020527-02p.htm zeigen jeweils Blade Server, bei denen mehrere Rechner, die so genannten Blades als Einschübe in ein Chassis einsetzbar sind.

In der heutigen Telekommunikations- und Internet-Infrastruktur werden leistungsfähige Datenverarbeitungssysteme, Server genannt, immer wichtiger. Um die steigenden Bedürfnisse an Geschwindigkeit zu befriedigen, bestehen moderne Serversysteme aus leistungsfähigen CPUs, bei gleichzeitig hoher RAM-Speicher und Festplattenkapazität.

Neben dem nachteilig hohen Strom- und Platzverbrauch wirken sich jedoch auch die geringe Skalierbarkeit der Leistung sowie die fehlende Möglichkeit, das System individuellen Anwendungen anzupassen, nachteilig auf das gesamte System aus. Als Lösung hierzu bieten sich modulare Systeme an, bei denen die einzelnen Komponenten auf die Bedürfnisse angepaßt werden.

Ein typisches modulares Datenverarbeitungssystem ist ein sogenannter Blade-Server, wie er auf dem Markt erhältlich ist. Unter der Internet-Adresse http://www.fujitsusiemens.de/rl/produkte/primergy/bx300.html gibt es nähere Informationen zu einem solchen Konzept.

Die dort dargestellten Blade-Server unterscheiden sich grundlegend von konventionellen Serverprinzipien. Ein vollständiger Server besteht aus einer Vielzahl sogenannter CPU-Blades, die jeder für sich ein vollständiges Datenverarbeitungssystem darstellen, bestehend aus CPU, Hauptspeicher und Festplatte. Durch die hohe Skalierbarkeit läßt sich die gesamte Rechenleistung eines solchen Systems auf die Bedürfnisse abstimmen. Die CPU-Blades sind über eine Datenverbindung untereinander verbunden. Zur externen Kommunikation weist ein Server mit diesem Konzept weitere Anordnungen, sogenannte Switch-Blades auf, die eine Verbindung in ein externes Netzwerk, beispielsweise das Internet, zur Verfügung stellen. Mit einer eigenen Stromversorgung für alle im Server befindlichen Module ausgestattet, ist ein solches System sehr flexibel bei gleichzeitig geringen Abmessungen und Stromverbrauch.

Besteht der Wunsch beispielsweise eine Erweiterungskarte einzubauen, wie dies in konventionellen Serversystemen möglich ist, kann diesem Wunsch mit den bisher bekannten Systemen nicht nachgekommen werden.

Der vorliegenden Erfindung stellt sich daher die Aufgabe, eine Anordnung zur Erweiterung eines Rechnermoduls innerhalb eines modularen Serversystems vorzusehen.

Diese Aufgabe wird erfindungsgemäß durch die Merkmale des Patentanspruchs 1 gelöst

Im folgenden wird die Erfindung unter Bezugnahme auf die Zeichnung näher erläutert. Es zeigen:
Figur 1 ein erstes Ausführungsbeispiel der Erfindung,
Figur 2 eine detaillierte Darstellung eines Rechner- und Erweiterungsmoduls.

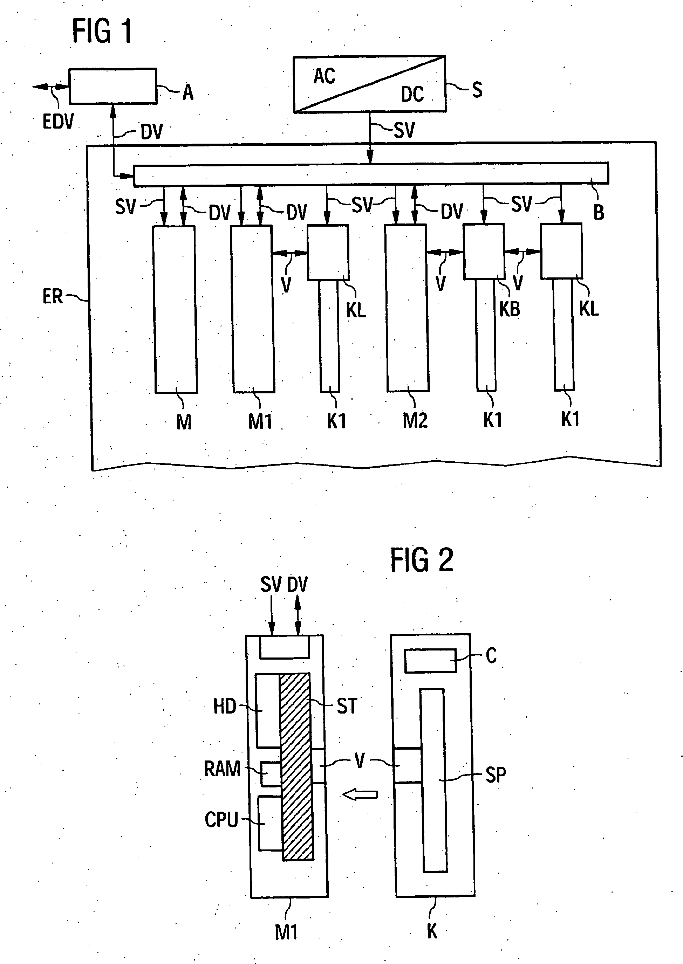

Figur 1 zeigt einen modular aufgebauten Server mit mehreren Rechnermodulen M, M1 und M2. Zur Kommunikation untereinander weisen die Rechnermodule eine Verbindung DV zu einer Anordnung B auf, welche die Kommunikation einzelner Rechnermodule untereinander oder einzelner Rechnermodule mit einer Einrichtung A ermöglicht. Die Einrichtung A dient zur Konfiguration der einzelnen Rechnermodule und als Kommunikationsschnittstelle mit der externen Kommunikationsleitung EDV. Die Rechnermodule sind dabei als Einschub ausgebildet, die in einen Einbaurahmen ER untergebracht werden. Der Einbaurahmen ER ist Teil des modularen Servers und kann neben den Rechnermodulen auch weitere Anordnungen aufnehmen.

Der modular aufgebaute Server enthält ferner eine Stromversorgungseinrichtung S, die mit der Anordnung B über eine Stromversorgungsleitung SV verbunden ist. Die Stromversorgungsleitung SV verbindet über die Anordnung B jedes Rechnermodul M, M1, M2 mit der Stromversorgungseinrichtung. Im ausgeführten Fall besteht die Anordnung B somit aus einigen stromführenden Kabeln SV zur Energieversorgung eines jeden Rechnermoduls, sowie aus einer Netzwerkverbindung DV zur Kommunikation.

Zusätzlich enthält die modulare Serveranordnung zwei erfindungsgemäße Erweiterungsmodule KL bzw. KB, die jeweils mit einer Steckkarte K1 verbunden sind. Zur Stromversorgung der Erweiterungskarte K1 können die Erweiterungsmodule KL und KB eine Stromverbindungsleitung SV zur Anordnung B bzw. zur Stromversorgungseinrichtung S aufweisen. Alternativ ist auch eine weitere externe Stromverosrgung denkbar.

Einige Module M1 und M2 weisen eine Verbindung V zu einem Steckplatzmodul KL bzw. KB auf. Dadurch ist eine Kommunikation zwischen dem Rechnermodul M und der in das Erweiterungsmodul eingefügten Steckkarte K1 möglich.

Im Detail ist dies in Figur 2 gezeigt. Gleiche Elemente tragen dabei gleiche Bezugszeichen, auf eine erneute Erläuterung wird verzichtet. Die einzelnen Module M enthalten ein vollständiges Datenverarbeitungssystem. Dieses besteht aus einer Prozessoreinheit CPU, einem Hauptspeicherbaustein RAM und einem optionalen, festen Datenspeicher HD.

Ein für den Betrieb des Rechnermoduls notwendiges Programm kann über die Kommunikationsschnittstelle DV oder über den festen Datenspeicher HD in den Hauptspeicher und die Prozessoreinheit geladen werden. Die einzelnen Bereiche des Rechnermoduls M sind über eine Schnittstelle ST untereinander verbunden. Dies kann ein normaler Speicherbus für die Verbindung RAM-CPU oder ein IDE-Interface zur Anbindung des festen Datenspeichers sein. Die Schnittstelle ST weist auch eine Steckverbindung V auf.

Die Steckverbindung V ermöglicht eine Kommunikation mit einem entsprechenden Gegenstück auf dem Modul K. Dazu können die beiden Steckverbindungen des Moduls M bzw. K direkt miteinander verbunden oder alternativ eine Leitung zwischen beiden Verbindungssteckern ausgebildet werden.

Das Modul K enthält einen Steckplatz SP, auf den eine Steckkarte aufgesteckt werden kann. Eine Kontrolleinrichtung C stellt die notwendigen Funktionen zur Kommunikation der nicht gezeigten Steckkarte mit dem Rechnermodul M über die Verbindung V bereit.

Im Fall eines üblichen PCI-Steckplatzes ist der Controller C als PCI-Controller ausgebildet. Es sind hier jedoch auch andere Kontrolleinrichtungen denkbar, beispielsweise SCSI-Controller, zusätzliche feste Datenspeicher oder Grafiksubsysteme.

Im Ausführungsbeispiel der Figur 2 enthält das Modul K den für den Betrieb notwendigen Strom über die Steckverbindung V und die Stromversorgungsleitung SV des Moduls M. Eine alternative Ausgestaltung hierzu ist es, eine Stromverbindungsleitung SV direkt auf dem Modul K unterzubringen.

Vorteilhaft ist es ebenso, die Kontrolleinrichtung C als Bestandteil des Moduls M auszubilden. Zusätzlich kann das Modul K eine weitere Verbindung V zu einem weiteren Modul K aufweisen. Damit ist beispielsweise eine Kette von verfügbaren PCI-Steckplätzen möglich, die an ein Rechnermodul M angekoppelt sind.

Ein modulares Serversystem, in dem die erfindungsgemäße Ausgestaltung vorteilhaft ist, stellt ein Blade-Server dar. Ein solcher Blade-Server ist schematisch in Figur 1 zu sehen und enthält drei unabhängige Rechnermodule M, M1 und M2 sowie drei Erweiterungsmodule KL bzw. KB, in denen jeweils PCI-Erweiterungskarten K1 eingefügt sind. Das Rechnermodul M1 enthält eine Verbindung zu einem Erweiterungsmodul KL und eine Steckkarte K1. Das Rechnermodul M2 ist mit einem Erweiterungsmodul KB und einem Erweiterungsmodul K1 verbunden. Eine Kommunikation zwischen dem Erweiterungsmodul KL und dem Rechnermodul M2 erfolgt über das Erweiterungsmodul KB.

Kerngedanke der Erfindung ist es, einen optionalen Steckplatz in einem modular aufgebauten Serversystem zur Verfügung zu stellen, um somit die Flexibilität des Serversystems hinsichtlich der Erweiterbarkeit zu erhöhen. Die dargestellten Ausführungsformen beziehen sich auf einen Blade-Server, sind jedoch sinngemäß auf jedes modular aufgebaute Serversystem zu erweitern. Dabei ist die Art der Erweiterung beliebig und im Kerngedanken nicht auf die beschriebenen PCI-Steckplätze beschränkt, sondern es können beispeilsweise auch PMC-Steckplätze oder eine Kombination vorgesehen werden.

Andere Erweiterungskarten wie beispielsweise Fire-Wire, Raid-Systeme, oder Graphiksubsysteme fallen ebenso unter den Erfindungsgedanken.

## Patentansprüche

1. Anordnung eines modular aufgebauten Serversystems mit
- einem Einbaurahmen (ER), in den mehrere Rechnermodule (M, M1, M2) einbaubar sind, die als Einschübe ausgebildet sind, wobei jeder Einschub ein eigenständiges Datenverarbeitungssystem, eine Kommunikationsschnittstelle (DV) und einen Stromversorgungsanschluss (SV) aufweist;
- einer Anordnung (B) mit mehreren Kommunikationsschnittstellen (DV) und Stromversorgungsanschlüssen (SV) zum Anschluss an die Rechnermodule;
- einer Stromversorgungseinrichtung (S) zur Stromversorgung eines jeden Rechnermoduls (M, M1, M2), die mit den Stromversorgungsanschlüssen (SV) der Anordnung (B) verbunden ist;
- die Kommunikationsschnittstellen (DV) der Anordnung (B) mit den Kommunikationsschnittstellen (DV) der Rechnermodule verbunden sind und eine Kommunikation der Rechnermodule untereinander ermöglichen;
**dadurch gekennzeichnet, daß**
- zumindest ein Rechnermodul (M, M1, M2) eine weitere Verbindung (V) für eine Datenkommunikation mit einer Erweiterungskarte (K1) umfasst;
- die Anordnung einen in den Einbaurahmen (ER) einbaubaren Einschub aufweist, der als Erweiterungsmodul (KL, KB) mit einem Steckplatz (SP) für eine zusätzliche Erweiterungskarte (K1) und mit einer Verbindung (V) für eine Datenkommunikation ausgebildet ist, wobei die Verbindungen (V) des zumindest einen Rechnermoduls (M1, M2, M3) und des Erweiterungsmoduls (KL, KB) für die Datenkommunikation direkt miteinander über eine Steck-verbindung oder eine Leitung zwischen Verbindungssteckern ausgebildet sind.

## Claims

1. Arrangement of a modular server system having
- a mounting frame (ER) in which it is possible to mount a plurality of computer modules (M, M1, M2) which are in the form of withdrawable parts, each withdrawable part having an independent data processing system, a communication interface (DV) and a power supply connection (SV);
- an arrangement (B) having a plurality of communication interfaces (DV) and power supply connections (SV) for connection to the computer modules;
- a power supply device (S) which is intended to supply power to each computer module (M, M1, M2) and is connected to the power supply connections (SV) of the arrangement (B);
- the communication interfaces (DV) of the arrangement (B) being connected to the communication interfaces (DV) of the computer modules and enabling communication between the computer modules;
**characterized in that**
- at least one computer module (M, M1, M2) comprises a further connection (V) for data communication with an expansion card (K1);
- the arrangement has a withdrawable part which can be mounted in the mounting frame (ER) and is in the form of an expansion module (KL, KB) having a slot (SP) for an additional expansion card (K1) and having a connection (V) for data communication, the connections (V) of the at least one computer module (M, M1, M2) and of the expansion module (KL, KB) for data communication being directly connected to one another via a plug-in connection or a line between connecting plugs.

## Revendications

1. Agencement d'un système serveur construit de manière modulaire avec
- un châssis de montage (ER) dans lequel on peut monter plusieurs modules d'ordinateur (M, M1, M2) réalisés sous forme de tiroirs, dans lequel chaque tiroir comporte un système de traitement de données autonome, une interface de communication (DV) et un raccordement d'alimentation électrique (SV) ;
- un agencement (B) à plusieurs interfaces de communication (DV) et raccordements d'alimentation électrique (SV) pour le raccordement aux modules d'ordinateurs ;
- un équipement d'alimentation électrique (S) pour l'alimentation électrique de chaque module d'ordinateur (M, M1, M2) relié aux connexions d'alimentation électrique (SV) de l'agencement (B) ;
- les interfaces de communication (DV) de l'agencement (B) étant reliées aux interfaces de communication (DV) des modules d'ordinateurs et permettant une communication des modules d'ordinateurs entre eux ;
**caractérisé en ce que**
- au moins un module d'ordinateur (M, M1, M2) comporte une autre liaison (V) pour une communication de données avec une carte d'extension (K1) ;
- l'agencement comporte un tiroir pouvant se monter dans le châssis de montage (ER), qui est réalisé sous forme de module d'extension (KL, KB) avec un emplacement de montage (SP) pour une carte d'extension supplémentaire (K1) et avec une liaison (V) pour une communication de données, les liaisons (V) de cet au moins un module d'ordinateur (M, M1, M2) et du module d'extension (KL, KB) étant directement reliées pour la communication de données par l'intermédiaire d'une liaison par connecteur ou d'une ligne entre les connecteurs.
